# EUROPEAN PATENT APPLICATION

(11) **EP 4 462 579 A1**
(43) Date of publication of application: **13.11.2024**
(21) Application number: 22925672.2
(22) Date of filing: 31.10.2022
(51) Int. Cl.: H01M 50/342, H01M 50/30, H01M 50/289, H01M 50/271

(54) **EXPLOSION-PROOF VALVE, BATTERY COVER, AND BATTERY**

(30) Priority: 10.02.2022 CN 202220271615 U
(71) Applicant: Eve Power Co., Ltd., Jingmen Hubei 448000 (CN)
(72) Inventor: MIN, Changfei, Jingmen, Hubei 448000 (CN); ZHAO, He, Jingmen, Hubei 448000 (CN); HUANG, Liming, Jingmen, Hubei 448000 (CN); XU, Yuebin, Jingmen, Hubei 448000 (CN); HE, Wei, Jingmen, Hubei 448000 (CN)
(74) Representative: Murgitroyd & Company
(86) International application number: PCT/CN2022/128517
(87) International publication number: WO 2023/151321

(57) **Abstract**

An explosion-proof valve, a cover plate of a battery and a battery are provided in the present application. The explosion-proof valve includes an annular groove, and the annular groove divides the explosion-proof valve into a rupture portion and a fixed portion. A pressure-bearing groove that is arc-shaped is recessedly provided on one side of the rupture portion. A bottom of the pressure-bearing groove is located within the annular groove.

## Description

This application claims priority to Chinese Patent Application No. 202220271615.8, filed on February 10, 2022, the disclosures of which are incorporated herein by reference in its entirety.

### TECHNICAL FIELD

The present application relates to the technical field of batteries, for example, to an explosion-proof valve, a cover plate of a battery, and a battery.

### BACKGROUND

With the increasing maturity of the technology for the lithium ion batteries, the lithium ion batteries are widely used in the field of electric vehicles as power batteries. The generation of gas when the battery is overcharged causes an increase in the internal pressure of the battery. In order to prevent explosion of the battery, it is necessary to provide an explosion-proof valve in the battery, and the explosion-proof valve is usually installed at the bottom of the cover plate of the battery or the bottom of the housing of the battery.

However, when a large amount of gas is generated due to the overcharge of the battery, the side of the explosion-proof valve which faces toward the inside of the battery everywhere is subject to the equal gas pressure, so that the rupture position of the explosion-proof valve is difficult to be predicted, and the situation in the event of the rupture of the explosion-proof valve is uncontrollable, which is liable to occur the danger.

### SUMMARY

According to the present application, it is provided an explosion-proof valve, a cover plate of a battery, and a battery, so that the rupture position may be controlled under withstanding the gas pressure, thereby improving the safety.

In a first aspect, according to the application, it is provided an explosion-proof valve including an annular groove, in which the annular groove divides the explosion-proof valve into a rupture portion and a fixed portion, a side of the rupture portion is recessedly provided with a pressure-bearing groove that is arc-shaped, and a bottom of the pressure-bearing groove is located within the annular groove.

In one embodiment, the explosion-proof valve is provided with a liquid injection hole.

In one embodiment, the explosion-proof valve is provided with an occlusion groove, and the liquid injection hole is provided at a bottom of the occlusion groove.

In one embodiment, a bottom of the annular groove is provided with one or more notches.

In one embodiment, a width of each of the one or more notches gradually decreases in a direction from an opening of the annular groove towards the bottom of the annular groove.

In one embodiment, the one or more notches extend along a circumferential direction of the annular groove.

In one embodiment, the explosion-proof valve is made of a metallic material.

A cover plate of a battery is provided and includes the explosion-proof valve, and the cover plate of the battery further includes a top cover on which the explosion-proof valve is disposed.

In one embodiment, the cover plate of the battery further includes a first insulating member detachablly connected to the top cover and configured to be located between the top cover and a housing of the battery.

In one embodiment, one of the first insulating member and the top cover is provided with one or more first positioning posts, and an other one of the first insulating member and the top cover is provided with one or more first positioning holes into which the one or more first positioning post are inserted respectively.

In a second aspect, according to embodiments of the present application, it is provided a battery including the cover plate of the battery, and housing, in which the housing is provided with a mounting hole, and the cover plate of the battery is snap-engaged to the housing to seal the mounting hole.

Advantageous effects of the present application are as follows.

The present application provides an explosion-proof valve, a cover plate of a battery, and a battery. The explosion-proof valve reduces its own strength by providing with an annular groove therein. Since the thickness of the explosion-proof valve at the annular groove is small, the explosion-proof valve is more likely to break at the annular groove and release pressure when the explosion-proof valve is impinged with the gas. Meanwhile, the pressure-bearing groove of the rupture portion is provided on a side of the rupture portion which faces toward the inside of the battery. When the gas inside the battery impinges on the explosion-proof valve, since more gas is collected at the pressure-bearing groove, and the arc surface of the pressure-bearing groove has a larger area with respect to the pressure-bearing groove that is flat, the pressure of the gas collected at the pressure-bearing groove is larger and more concentrated. In this way, the rupture portion is caused to be subjected to a larger pressure than the fixed portion, and the explosion-proof valve is further caused to be preferentially ruptured from the annular groove. The explosion-proof valve is capable of being ruptured at the annular groove when withstanding gas pressure, and the rupture position is controllable, thereby improving the safety.

### BRIEF DESCRIPTION OF THE DRAWINGS

FIG. 1 is an exploded view of a cover plate of a battery according to embodiments of the present application;
FIG. 2 is a cross-sectional view of the cover plate of the battery according to embodiments of the present application;
FIG. 3 is a schematic structural diagram of an explosion-proof valve according to embodiments of the present application;
FIG. 4 is a cross-sectional view of an explosion-proof valve according to embodiments of the present application.

In the figure:
1, explosion-proof valve; 2, top cover; 3, pole; 4, current collector disk; 5, first insulating member; 6, sealing ring; 7, terminal; 8, second insulating member; 11, liquid injection hole; 12, annular groove; 13, rupture portion; 14, fixed portion; 15, pressure-bearing groove; 16, occlusion groove; 51, first positioning post; 81, second positioning post; and 121, notch.

### DETAILED DESCRIPTION

In the description of the present application, it is to be noted that the orientation or positional relationship indicated by the terms "center", "upper", "lower", "left", "right", "vertical", "horizontal", "inner", "outer", etc., is based on the orientation or positional relationship shown in the drawings. It is merely for purposes of describing the present application and simplifying the description, and not to indicate or imply that the devices or elements referred to must have a particular orientation, be constructed and operated in a particular orientation, and therefore should not be construed as limiting the application. Furthermore, the terms "first" and "second" are used for descriptive purposes only and are not to be construed as indicating or implying relative importance. And, the terms "first position" and "second position" are two different positions.

Unless otherwise explicitly specified or defined, the terms such as "mount", "connect", "connection", and "fixed" should be interpreted in a broad sense. For example, a connection may be a fixed connection, or may be a detachable connection; a connection may be a mechanical connection, or may be an electrical connection; a connection may be a direct connection, or may be an indirect connection via an intermediate medium, or may be communication between interiors of two elements or an interaction relationship between two elements. It may be appreciated by those of ordinary skill in the art that the specific meanings of the aforementioned terms in the present application can be understood depending on specific situations.

Unless otherwise explicitly specified or defined, a first feature being "above" or "below" a second feature may be that the first and second features are in direct contact or that the first and second features in indirect contact by means of an intermediate medium. In addition, the first feature being "over", "above" or "on the top of' a second feature may be that the first feature is above directly or above obliquely the second feature or merely indicates that the horizontal height of the first feature is higher than that of the second feature. The first feature being "underneath", "below" or "on the bottom of' a second feature may be that the first feature is below directly or below obliquely the second feature or merely indicates that the horizontal height of the first feature is lower than that of the second feature.

The technical solution of the present application will be further explained with reference to the accompanying drawings and with reference to the detailed description.

According to the embodiments, it is provided a battery. The battery is a lithium ion battery and includes a positive electrode, a negative electrode, a separator, and electrolyte. The separator is arranged to separate the positive electrode from the negative electrode to prevent a short circuit. The separator is capable of allowing lithium ions to pass therethrough. In the manufacturing process of the lithium ion battery, a winding process is commonly used, that is, a winding structure is formed by stacking the positive electrode, the separator, and the negative electrode in sequence and winding them. The winding structure is put into a housing of the battery after the winding process is finished, and the electrolyte is injected therein to form a complete battery.

The battery includes a housing and a cover plate. The housing is provided with a mounting hole, and the cover plate of the battery is snap-engaged to the housing to seal the mounting hole. The detachable cover plate of the battery facilitates an operator to put the positive electrode, the negative electrode, the separator, the electrolyte, and the like into the housing via the mounting hole, and facilitates disassembly and recycling of the battery at a later stage, which reduces the battery cost from the perspective of the whole life cycle of the battery.

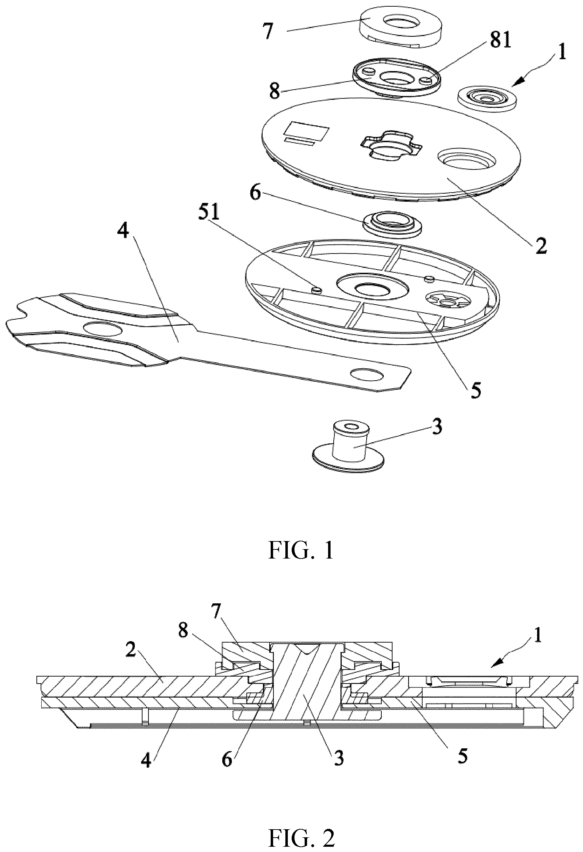

Illustratively, as shown in FIG. 1, the cover plate of the battery includes a top cover 2 provided to be snap-engaged to the housing to form a sealing structure.

Illustratively, as shown in FIGS. 1 and 2, the cover plate of the battery includes a pole 3. A first end of the pole 3 is fixed to the top cover 2, and a second end of the pole 3 extends through and out of the top cover 2. The pole 3 is connected to the positive electrode of the battery, and the housing is connected to the negative electrode of the battery. So, the positive electrode and the negative electrode of the battery may be connected to an external circuit.

When the battery needs to be discharged at a large rate (3C or more), the thermal effect of the current is obvious. So, it is easy to cause the tabs of the battery to heat up locally, so as to cause the battery to expand, thereby causing the danger. To solve this problem, the cover plate of the battery further includes a current collector disk 4. The pole 3 passes through and is electrically connected to the current collector disk 4. The positive electrode of the winding structure is extended from one end of the winding structure, and the negative electrode of the winding structure is extended from the other end of the winding structure. Both the positive electrode and the negative electrode of the winding structure are each of a multi-layer structure. The positive electrode with the multi-layer structure is electrically connected to the current collector disk 4, and the negative electrode with the multi-layer structure is electrically connected to the housing. So, the battery forms a full-tab structure, thereby greatly reducing the thermal effect of the battery when discharged at a high rate, and enabling the thermal to be dispersed, which improves the safety performance of the battery.

Since the top cover 2 is mostly made of a metallic material, in order to prevent the short circuit of the battery, the cover plate of the battery further includes a first insulating member 5 detachably connected to the top cover 2 and positioned between the top cover 2 and the housing of the battery. The cover plate of the battery does not allow to be electrically charged, so that there is a safe distance between the positive electrode and the negative electrode to prevent the short circuit. The top cover 2 needs to be in contact with the housing to be fixed, so that the first insulating member 5 needs to be provided between the top cover 2 and the housing of the battery for insulating.

Illustratively, as shown in FIG. 1, the first insulating member 5 is provided with one or more first positioning posts 51, the top cover 2 is provided with one or more first positioning holes, and the first positioning posts 51 are inserted into the first positioning holes respectively. The first positioning post 51 cooperates with the first positioning hole, so that when the first insulating member 5 is assembled with the top cover 2, the top cover 2 is prevented from being partially in contact with the housing due to deviation to cause a short circuit, thereby improving the safety of the battery. Illustratively, the number of the first positioning post(s) 51 and the first positioning hole(s) are each two, so as to improve positioning accuracy.

In other embodiments, the top cover 2 is provided with first positioning post(s) 51, and the first insulating member 5 is provided with first positioning hole(s), so that the positioning effect between the top cover 2 and the first insulating member 5 can also be achieved.

As a result of the need for welding the busbars to connect the electrodes of the plurality of batteries in series or in parallel after the batteries are grouped, the batteries may be accessed to external circuits. However, the size of the pole 3 of the battery is small and the welding strength is not high. To solve this problem, as shown in FIGS. 1 and 2, the cover plate of the battery further includes a terminal 7 which is fixedly connected to the top cover 2 and is electrically connected to one end of the pole 3 which extends out of the top cover 2. The suitable material of terminal 7 may be selected according to the welding performance, and a sufficiently large welding area of the terminal 7 may be designed according to the welding requirements, thereby improving the welding strength of the terminal 7 with the busbars.

Illustratively, the cover plate of the battery further includes a second insulating member 8 disposed between the terminal 7 and the top cover 2. The second insulating member 8 is provided to insulate the top cover 2 and the pole 3. The second insulating member 8 is cooperated with the first insulating member 5 so that the top cover 2 is insulated from the positive electrode and the negative electrode of the battery respectively, thereby further improving the safety of the battery and reducing the risk of short circuit.

Illustratively, the second insulating member 8 is provided with second positioning post(s) 81, the terminal 7 is provided with second positioning hole(s), and the second positioning post(s) 81 are inserted into the second positioning hole(s), respectively. The second positioning post 81 cooperates with the second positioning hole, so that the second insulating member 8 may be assembled with the terminal 7 without causing the terminal 7 to partially contact the top cover 2 due to deviation, thereby improving the safety of the battery. Illustratively, the number of the second positioning post(s) 81 and the second positioning hole(s) are each two, so as to improve positioning accuracy.

In other embodiments, the terminal 7 is provided with second positioning post(s) 81, and the second insulating member 8 is provided with second positioning hole(s), so that the positioning effect between the terminal 7 and the second insulating member 8 may also be realized.

Illustratively, the inside of the housing of the battery is filled with electrolyte, and the seal between the pole 3 and the top cover 2 or the pole 3 and the first insulating member 5 is poor. As shown in FIGS. 1 and 2, in order to prevent leakage of the electrolyte, the cover plate of the battery further includes a sealing ring 6, which is sleeved on the pole 3 and sandwiched between the first insulating member 5 and the top cover 2. The sealing ring 6 may ensure the sealing property between the sealing ring 6 and the pole 3 via the itself elasticity of the sealing ring 6. The sealing ring 6 is sandwiched by the top cover 2 on the first insulating member 5, so that the sealing property between the sealing ring 6 and the first insulating member 5 may be ensured, so that the electrolyte does not leak out.

In order to improve the safety of the battery and prevent explosion or deflagration of the battery in the case of overcharge or impact, the cover plate of the battery further includes an explosion-proof valve 1 provided on the top cover 2. Illustratively, the top cover 2 is provided with a step hole including a large-diameter section and a small-diameter section. The explosion-proof valve 1 is provided at one end of the top cover 2 which is provided with the large-diameter section, and abuts against the step between the large-diameter section and the small-diameter section.

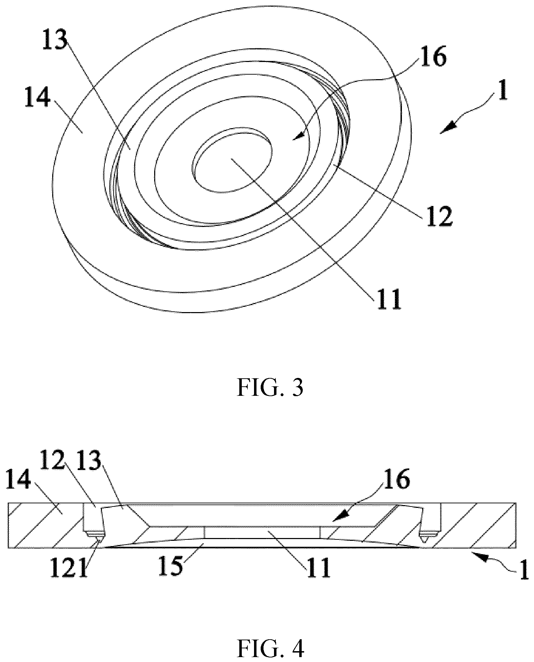

As shown in FIGS. 3 and 4, the explosion-proof valve 1 is provided with an annular groove 12 which divides the explosion-proof valve 1 into a rupture portion 13 and a fixed portion 14. A pressure-bearing groove 15 that is arc-shaped is recessedly provided on one side of the rupture portion 13, and a bottom of the pressure-bearing groove 15 is located within the annular groove 12. The fixed portion 14 is provided to be welded or glued with the inner wall of the step hole, so as to fix the explosion-proof valve 1.

The explosion-proof valve 1 reduces its own strength by providing the annular groove 12 therein. Since the thickness of the explosion-proof valve 1 at the annular groove 12 is small, the explosion-proof valve 1 is more likely to break at the annular groove 12 and release pressure when the explosion-proof valve 1 is impinged with the gas. At the same time, the pressure-bearing groove 15 of the rupture portion 13 is provided on a side of the rupture portion which faces toward the inside of the battery. When the gas inside the battery impinges on the explosion-proof valve 1, since more gas is collected at the pressure-bearing groove 15, and the arc surface of the pressure-bearing groove 15 has a larger area with respect to the pressure-bearing groove that is flat, the pressure of the gas collected at the pressure-bearing groove 15 is larger and more concentrated. In this way, the rupture portion 13 is caused to be subjected to a larger pressure than the fixed portion 14, and the explosion-proof valve 1 is further caused to be preferentially ruptured from the annular groove 12.

The explosion-proof valve 1 is capable of being ruptured at the annular groove 12 when withstanding gas pressure, and the rupture position is controllable, thereby improving the safety.

Illustratively, the explosion-proof valve 1 is provided with a liquid injection hole 11, so that the explosion-proof valve 1 integrates the function of the liquid injection hole 11 at the same time. In the production process, the explosion-proof valve 1 and the liquid injection hole 11 are integrally manufactured, so that the production efficiency may be improved and the manufacturing cost may be reduced. Further, since the explosion-proof valve 1 integrates the liquid injection hole 11, the space in which the liquid injection hole 11 is provided on the cover plate of the battery is greatly saved, thereby improving the installation space of the explosion-proof valve 1, and effectively improving the voltage control capability of the explosion-proof sheet, which effectively improves the safety of the lithium battery.

Illustratively, as shown in FIGS. 3 and 4, the explosion-proof valve 1 is provided with an occlusion groove 16, and the injection hole 11 is provided at the bottom of the occlusion groove 16. When the injection of the electrolyte into the battery is completed through the injection hole 11, the operator needs to block the injection hole 11 to prevent the electrolyte from leaking. Generally, the injection hole 11 is blocked through the glue, and the occlusion groove 16 may provide a space for the glue that blocks the injection hole 11. So, the contact area between the glue and the explosion-proof valve 1 may be improved, the blocking effect may be improved, and the glue may not occur the protrusions thereon, thereby ensuring the flatness of the surface of the top cover 2.

By way of example, the occlusion groove 16 needs to dodge the annular groove 12, that is, the occlusion groove 16 may be provided only inside the rupture portion 13 or inside the fixed portion 14. When the occlusion groove 16 is provided in the fixed portion 14, the local strength of the fixed portion 14 is weak, and the rupturing position when the explosion-proof valve 1 is ruptured is easily uncontrollable, so the occlusion groove 16 is provided inside the annular groove 12. Illustratively, the occlusion groove 16 is located at the center of the annular groove 12 so that the rupture portion 13 may be uniformly ruptured along the annular groove 12 when being stressed.

Illustratively, the bottom of the annular groove 12 is provided with notch(es) 121. By providing the notch(es) 121 at the bottom of the annular groove 12, the strength of the annular groove 12 may be further reduced, and the specific size and the specific quantity of the notch(es) 121 can be controlled according to the design requirements of the explosion-proof valve 1, so that when the air pressure inside the battery reaches a predetermined value, the explosion-proof valve 1 may be ruptured from the annular groove 12.

Illustratively, the width of the notch 121 decreases gradually in the direction from an opening of the annular groove 12 toward the bottom of the annular groove 12. A bottom end of the notch 121 is of a sharp shape, the stress concentration at this bottom end is strong, and thus the strength at the notch 121 may be further reduced.

Illustratively, the notch 121 extends along the circumferential direction of the annular groove 12 so that the annular groove 12 everywhere is equal in strength and may be uniformly cracked when stressed.

Illustratively, the explosion-proof valve 1 is made of a metallic material. The metal has ductility, which facilitates integral stamping formation, improves production efficiency, and reduces the production cost. Moreover, the metal has good welding performance, and the explosion-proof valve 1 may be fixed to the top cover 2 by welding, which is simple in process and high in production efficiency.

Illustratively, the explosion-proof valve 1 and the top cover 2 are made of the same metal to improve welding stability, such as aluminum, steel, and the like.

## Claims

1. An explosion-proof valve comprising an annular groove (12), wherein the annular groove (12) divides the explosion-proof valve (1) into a rupture portion (13) and a fixed portion (14), a side of the rupture portion (13) is recessedly provided with a pressure-bearing groove (15) that is arc-shaped, and a bottom of the pressure-bearing groove (15) is located within the annular groove (12).

2. The explosion-proof valve according to claim 1, wherein the explosion-proof (1) valve is provided with a liquid injection hole (11).

3. The explosion-proof valve according to claim 2, wherein the explosion-proof valve (1) is provided with an occlusion groove (16), and the liquid injection hole (11) is provided at a bottom of the occlusion groove (16).

4. The explosion-proof valve according to claim 1, wherein a bottom of the annular groove (12) is provided with one or more notches (121).

5. The explosion-proof valve according to claim 4, wherein a width of each of the one or more notches (121) gradually decreases in a direction from an opening of the annular groove (12) towards the bottom of the annular groove.

6. The explosion-proof valve according to claim 4, wherein the one or more notches (121) extend along a circumferential direction of the annular groove (12).

7. The explosion-proof valve according to claim 1, wherein the explosion-proof valve (1) is made of a metallic material.

8. A cover plate of a battery comprising the explosion-proof valve according to any one of claims 1 to 7, wherein the cover plate of the battery further comprises a top cover (2) on which the explosion-proof valve (1) is disposed.

9. The cover plate of the battery according to claim 8, further comprising a first insulating member (5) detachablly connected to the top cover (2) and configured to be located between the top cover (2) and a housing of the battery.

10. The cover plate of the battery according to claim 9, wherein one of the first insulating member (5) and the top cover (2) is provided with one or more first positioning posts (51), and an other one of the first insulating member (5) and the top cover (2) is provided with one or more first positioning holes into which the one or more first positioning post (51) are inserted respectively.

11. A battery comprising the cover plate of the battery according to any one of claims 8 to 10, and a housing, wherein the housing is provided with a mounting hole, and the cover plate of the battery is snap-engaged to the housing to seal the mounting hole.
